# EUROPEAN PATENT APPLICATION

(11) **EP 4 618 386 A1**
(43) Date of publication of application: **17.09.2025**
(21) Application number: 24163160.5
(22) Date of filing: 13.03.2024
(51) Int. Cl.: H02M 1/00

(54) **CONTROL OF RING ARRANGEMENT OF CELLS, AS SST CELLS**

(71) Applicant: Hitachi Energy Ltd, 8050 Zürich (CH)
(72) Inventor: MOGOROVIC, Marko, 1205 Geneva (CH); SIEMASZKO, Daniel, 1450 Ste-Croix (CH)
(74) Representative: Vossius & Partner Patentanwälte Rechtsanwälte mbB

(57) **Abstract**

The invention provides an electrical energy distribution system comprising: an electrical source; a plurality of converters, connected in a direct current ring circuit with each other and the electrical source.

## Description

The present disclosure relates to an electrical energy distribution system, a train comprising the electrical energy distribution system and a method producing the according electrical energy distribution system.

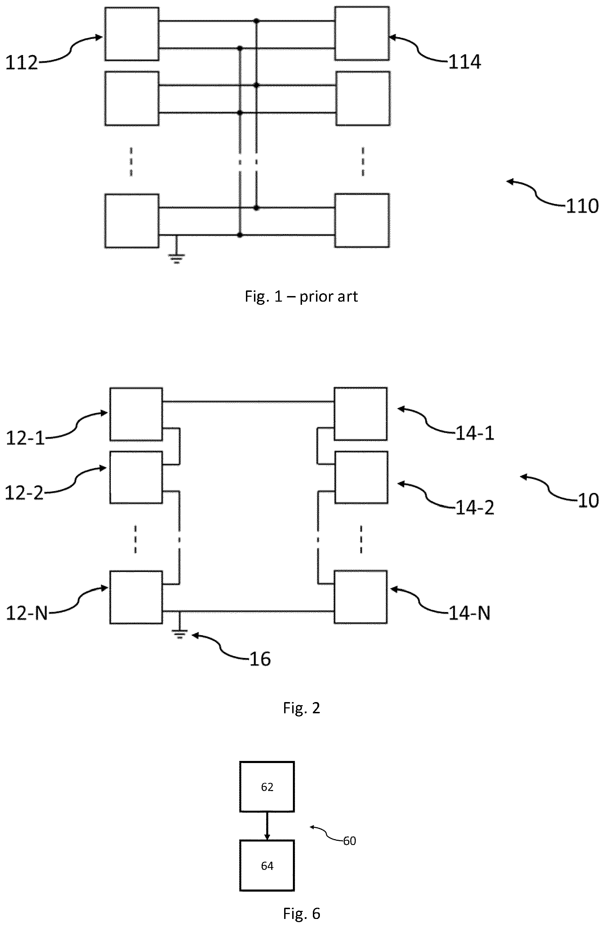

Electric distribution systems connect all the electrical loads to the electric energy sources. Traditionally, this is done by connecting all the sources and loads in parallel, as illustrated in Figure 1. This configuration has disadvantages. Especially for long distance power distribution systems, parallel connection uses a lot of cable.

WO 2023/117068 A1 discloses a power supply system. A lot of cable is also used in this prior art. Such a solution is expensive and complicated.

Such and more disadvantages shall be overcome by the present disclosure.

The present disclosure relates to an electrical energy distribution system comprising: an electrical source; and a plurality of converters, connected in a ring circuit with each other and the electrical source.

The electrical source can be a battery, a power grid, a solar panel, wind or solar related collection grids, or something else which provides electrical energy. The electrical source may be a direct current (DC) source or an alternating current (AC) source. When the electrical source is a battery, a power grid, a solar panel, wind or solar related collection grids, the ring circuit preferably works in DC. The electrical source, being connected in ring connection with the plurality of converters, is preferably with one terminal (/pole) connected to a first on of the plurality of converters and with a second terminal (/pole) connected to a last one of the plurality of converters. Between the electrical source and the ring circuit, there may be a further converter.

The plurality of converters may be two converters, three converters, or another number (bigger than 3) of converters. The converters are connected on a first side in the ring circuit. The first side can be the input side (for converters that are interfacing a load on a second side; or output side for converters that are interfacing a sources on the second side). Each of the plurality of converters may have one or more loads and/or sources connected to the other side. The converters may be bidirectional (for load or source).

The ring circuit is like a series connection but without further connection added to connections between converters (or between an exterior converter and the electrical source). This means that each converter of the plurality of converters is (on a first side/ input side) connected with one pole to only one other converter (or electrical source for exterior converter), and with the other pole connected to another other converter (or electrical source for exterior converter). The ring circuit may be a direct current (DC) ring circuit or an alternating current (AC) ring circuit.

These features may improve voltage balancing, reliability, and/or lower installation costs. Further there may be lower converter complexity and cost, improved converter reliability, significantly less cabling (up to 50% less) and improved efficiency of the entire distribution system.

The electrical energy distribution system may be applied in long distance energy transport (like an energy grid (preferably a MVDC electrical grid) spanning over several kilometers, or an energy grid connecting several buildings, or a train as explained below). A long distance may be several tens of meters, several hundreds of meters, several kilometers, several tens of kilometers, or longer distances. For such long distances, the ring circuit (or ring connection) is advantageous because only a single cable (and/or single phase) needs to be provided between each converter (and electrical source). Hence, less cable is necessary.

Power grids often use higher voltages for energy transport, while loads and sources often work on lower voltages. The ring circuit connection has the additional advantage that the higher voltage of the line is already broken down by the series-connection nature of the ring circuit (while receiving the same current). Therefore, the plurality of converters may convert from not so high voltages. This applies especially for DC power lines (in the ring circuit).

Especially for a DC system, consumers (combination of a converter with an according load) may comprise semiconductor switches with limited operating voltage, especially in order to connect to MV (medium voltage), also called MVDC (medium voltage direct current). For this, serial connection of semiconductor switches (module level) or even entire converter cells (converter level) is advantageous. This disclosure proposes a new concept, where the serialization is done on the level of the entire distribution system, as for example illustrated in fig. 2. The serial energy distribution system of this disclosure can provide significant benefits in terms of robustness, cost and efficiency especially for certain kind of emerging high-power MV applications, such as data centers, PV and wind collection, H2 etc. (photovoltaic or wind energy collection grids, supply for hydrogen electrolysers, etc.).

The disclosure allows for reduced amount of cabling and to allow to go to higher voltages and powers. The disclosure may be well applied to MVDC Data Centers, wind and PV collection, large H2.

Various embodiments may preferably implement the following features.

Preferably, a first converter of the plurality of converters has an insulation which is lower than an insulation required when the electrical source applies a maximum operating voltage to the first converter of the plurality of converters connected in the ring circuit.

The insulation requirement is an insulation requirement for the case that the voltage of the electrical source would be applied directly to one converter (in the above case, the first converter). The insulation of an individual converter of the plurality of converters can be lower than the (full) insulation requirement because multiple converters are connected in the ring circuit. Each converter, which is not the converter closest to a high potential to ground (or life wire in AC) pole of the electrical source (and/or to the higher absolute voltage and/or to the pole of the electrical source which is not ground; while the other pole has a lower potential or is ground) may have a lower insulation than the insulation requirement for the full voltage. The two end points of this regional serialized grid may be GND and +MVDC (unipolar MVDC) or +MVDC and -MVDC (bi-polar MVDC). Preferably, the converter closest to the high potential connection/pole of the electrical source has an insulation according to the insulation requirement (closest may mean directly connected in this case). This lower insulation may reduce cost. The insulation of an individual converter may be depending on the source voltage, depending on the position of the individual converter, between ground and the line potential, depending on the total number of converters connected in the ring circuit (or, in some examples, if the converters have different impedances, depending on the proportion of the converters connected upstream in the overall impedance; hence the loads and sources may be active loads and active sources), and/or depending on other factors. The insulation may also include lightning protection. This may comprise the use of a surge arrester.

The maximum operating voltage of the electrical source may be the highest voltage which the electrical source may provide (/apply to the circuit) in normal operation (according to standards of the power grid, for example).

Preferably, the insulation of the first converter of the plurality of converters is configured to withstand a voltage at the first converter when the electrical source applies the maximum operating voltage to the plurality of converters.

The voltage (and the voltage drop) at the first converter also depends on how much voltage potential has already dropped over the converter upstream (of the plurality of converters). Upstream means the converters which are connected between the first converter and the life wire connection/pole of the electrical source.

Preferably, the electrical energy distribution system comprises further a plurality of bypass switches, wherein each converter of the plurality of converters is connected on the first side of the converter in parallel with one bypass switch of the plurality of bypass switches.

The bypass switches may be individually opened or closed. When a bypass switch is closed, the corresponding converter (and potential further load or sources connected to the corresponding converter) may not be supplied with electrical energy (or may not be able to supply energy in the case of sources). This may improve flexibility and reliability in case of failure. Different converters of the plurality of converters may be individually chosen to be used or not used (by individually opening or closing the corresponding bypass switches).

Preferably, each converter of the plurality of converters is configured for a voltage drop of the voltage of the electrical source divided by N - 1, where N is a number of the plurality of converters connected in the ring circuit.

In embodiments, the converter may be configured for the voltage (this may mean maximum operating voltage) of the energy source divided by N - x, where x bigger 1. This (N - 1 and N - x cases) may apply in cases where the voltage drop (may be equal to/the same as operating voltage of the corresponding converter) over each of the plurality of converters is similar.

In cases where the voltage drop over different converters is different, each converter may be configured for a voltage drop when at least one other converter (possibly the one other converter with the highest voltage drop) is not in use (maybe by closing the bypass switch of the one other converter or otherwise short-circuiting it).

Additional to the configuration for the voltage of the electrical source divided by N - 1 (or N - x), there may be a margin in the converters for higher voltages: higher by a fixed voltage margin or by a margin of, for example, 5 %.

These aspects may improve redundancy.

Preferably, an insulation of each converter of the plurality of converters is bigger than or equal to a requirement for insulation of an absolute voltage the corresponding converter is configured to receive on one side (of the converter) of the serial connection relative to an absolute voltage applied by the electrical source at the other end of the serial connection (or relative to ground).

The insulation of each converter may correspond to a highest voltage present at some point in/at the converter relative to the lowest voltage of the entire system (or relative to ground; preferably the lower voltage pole of the electrical source).

In embodiments, the plurality of converters may be identical (/similar) in some aspects and different in other aspects. Some of the converters may be identical in some aspects while others may be different in these aspects. They may be identical or different in aspects of type (DC-to-AC converter, DC-to-DC converter, transformer, or combination of converters) and/or output voltage and/or input voltage (which might be dependent on the impedance presented by the corresponding converter). Converters being identical or having identical aspects may be within an uncertainty of ± 5 % or ± 10 %.

Preferably, each but one converter of the plurality of converters has an insulation which is lower than an insulation required when the electrical source applies a maximum operating voltage to the corresponding converter of the plurality of converters.

This can be done because the voltage drops over each (connected) converter. Therefore, costs can be saved with the lower insulation converter.

Preferably, at least one converter of the plurality of converters comprises at least one of: a transformer, a DC-to-AC converter, an AC-to-DC converter, a DC-to-DC converter, and a medium frequency transformer.

A converter of the plurality of converters may comprise a dual active bridge converter, a transformer (with similar or different number of windings as other converters), a solid state transformer (SST), and/or other parts.

Preferably, the electrical energy distribution system comprises further: a battery; an electrical load; wherein the converter comprises: the transformer with a first connection pair, a second connection pair, and a third connection pair; the DC-to-AC converter connected to the other converters of the plurality of converters in the ring circuit and connected to the first connection pair of the transformer; a first AC-to-DC converter connected to the battery and connected to the second connection pair of the transformer; and a second AC-to-DC converter connected to the electrical load and connected to the third connection pair of the transformer.

The additional battery may be configured to provide electrical energy to the electrical load, especially in times when the electrical source does not provide electrical energy (or when the corresponding bypass switch is closed). The additional battery may absorb excess available energy at times of surplus. In an embodiment, the electrical load may be directly connected to third connection pair of the transformer. The second AC-to-DC converter may be omitted in this embodiment. This is especially advantageous if the electrical load requires AC. In alternatives, some or all (but one) of the electrical loads may be sources. Overall in an electrical energy distribution system, it is advantageous to have at least one source and at least one load. More sources and/or more loads are possible.

Preferably, the electrical source comprises a plurality of electrical sub-sources connected in series.

The plurality of electrical sub-sources may be identical sources or different sources.

Preferably, the electrical source is configured to provide a medium voltage direct current, MVDC.

Besides the common definitions, MV may comprise voltages of 1.5 kV to 50 kV (35 kV rms AC voltage or, equivalently, 50 kV DC voltage). It is also possible that LV (low voltage) comprises up to 1.5 kV and HV comprises 1.5 kV and above.

Preferably, the electrical energy distribution system comprises further a plurality of electrical loads, each load of the plurality of electrical loads connected to at least one converter of the plurality of converters.

This load may be the same load as mentioned before or a different load.

Preferably, each load of the plurality of electrical loads is connected to two converters of the plurality of converters.

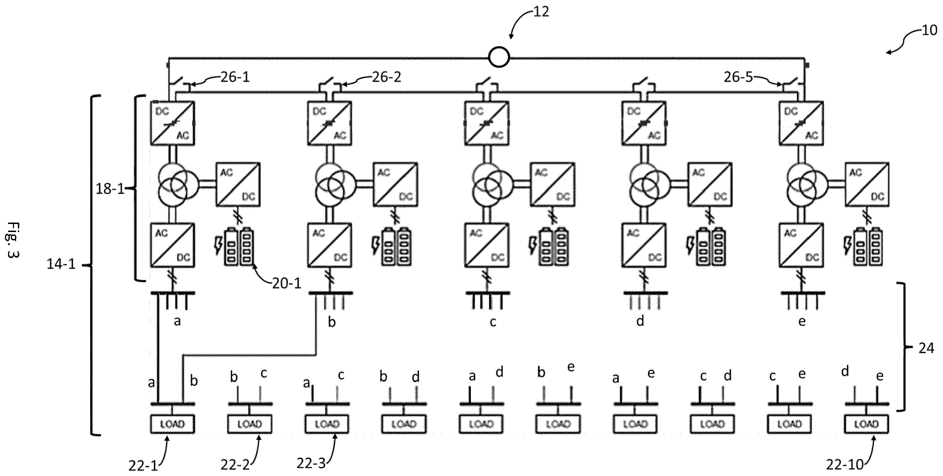

An example of this can be seen in fig. 3. This feature may be advantageous for the case that one converter fails (short circuit and/or bypass switch is closed). In that case, the electrical load still receives electrical energy. The plurality of converters may be connected to a plurality of electrical load providing an electrical distribution layout. Each electrical load may be connected to two converters. Preferably, no two electrical loads are connected to the same two converters.

The connection in the ring circuit of the plurality of converters, and the converters as feeders to separate loads, allows increase of power of each converter/load cell, while having the same operating voltage and power quality requirements. It allows to decrease the operating voltage of the converter/load cell down to levels that do not need complex semiconductor serialization. Also, power can be balanced in all the converters.

Preferably, the plurality of electrical loads is configured to function (or work or operate) on a low voltage direct current, LVDC.

The present disclosure also relates to a train comprising an electrical energy distribution system comprising: an electrical source; and a plurality of converters, connected in a ring circuit with each other and the electrical source, wherein traction of the train is distributed over at least two cars (/carriages) of the train.

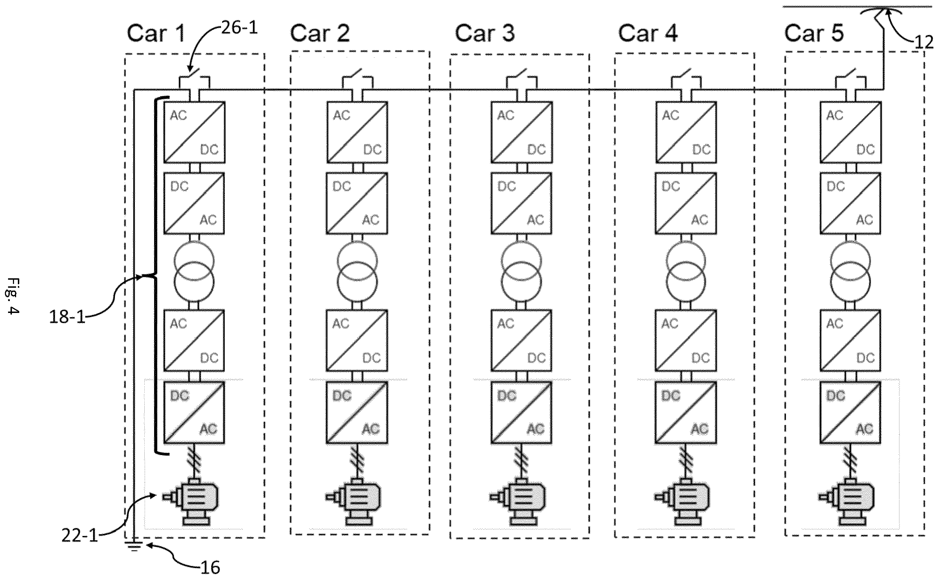

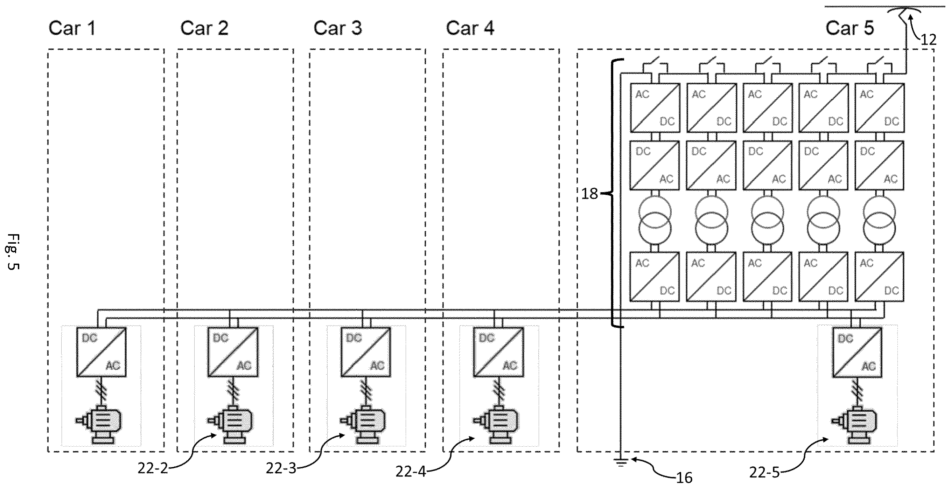

Examples of the train embodiment are shown and explained below with reference to figs. 4 and 5.

The traction may be an electrical load. The traction (unit) may be an (or several) electrical engine(s) (traction engine). Alternatively, traction may be a group of a dedicated converter (also referred to as drive) and an electrical machine. In any case, distributed traction may be different engines (or groups) in different cars of the train. Each car of the train already comprising a traction unit may (further) comprise a (dedicated) converter (of the plurality of converters as mentioned above). The converters may be (/comprise) AC-to-AC, AC-to-DC converters, transformers, and/or other parts. The converters may be configured to receive AC or DC (possible MVDC electrical grid) electrical energy from an electrical cable over train tracks. Alternatively, each car of the train already comprising a traction unit may further comprise a part of a converter. The remaining part of each converter may be accumulated in one car of the train.

This may improve redundancy (when one converter/traction unit fails, the rest still works), space utilization in trains, flexibility in scaling train length, costs may be lowered.

The disclosure of this document applies well to traction where the 1MW from standard SST traction solution (Power electronics Traction Transformer PETT) was too small for optimized cells in ring circuit. There is the possibility of various series-parallel configurations for same motor drives.

A similar configuration, as an alternative embodiment, may also be used in wind or solar related collection grids. A plurality of wind and/or solar electrical sources may be a plurality of electrical sources connected to (most of) the plurality of converters of the electrical energy distribution system (of any mentioned above). One of the plurality of converters may be connected to a consumer. This provides a ring kind of connection to "collect" power from the wind/solar electrical sources.

Preferably, the plurality of converters is distributed over the at least two cars of the train.

Preferably, at least a part of each converter of the plurality of converters is comprised by one car of the train.

The present disclosure also relates to a method of producing an Electrical energy distribution system comprising: providing an electrical source configured to provide a voltage; providing a plurality of converters, connected in a ring circuit with each other and the electrical source on a first side of each converter of the plurality of converters.

The present disclosure relates to an electrical energy distribution system comprising: an electrical source; a plurality of converters, connected in a (direct current) ring connection with each other and the electrical source (on a first side of each converter of the plurality of converters); wherein a first converter of the plurality of converters is configured for an operating voltage which is lower than a voltage the electrical source applies as a maximum operating voltage to the plurality of converters connected in the ring circuit.

The aspects of the disclosure increase a possible power rating of consumers (converters with loads; or alternatively sources) as effectively a smaller number of more powerful converters may be used to supply the same load or collect from the same sources. This is more cost effective. It makes it possible to use multiphase and/or multi-winding cells. Costs may be saved on cables and installation. The connection in the ring circuit may be done with one cable instead of two cables. Redundancy is provided. A higher reliability may be present due to a lower component count.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows a known electrical energy distribution system.
Fig. 2 shows an electrical energy distribution system with connection in the ring circuit.
Fig. 3 shows an electrical energy distribution system with a load distribution system.
Fig. 4 shows a traction case with an electrical energy distribution system.
Fig. 5 shows another traction case with an electrical energy distribution system.
Fig. 6 shows a method of producing an Electrical energy distribution system.

Fig. 1 shows a known electrical energy distribution system 110. The known electrical energy distribution system 110 comprises a plurality of sources 112 and a plurality of consumers 114. The plurality of sources 112 and plurality of consumers 114 are interconnected in parallel.

Fig. 2 shows an electrical energy distribution system 10 with connection in a ring circuit according to this disclosure. The electrical energy distribution system 10 comprises a plurality of sources 12 (12-1 to 12-N) and a plurality of consumers 14 (14-1 to 14-N). The plurality of sources 12 and plurality of consumers 14 are interconnected in a ring circuit. There are no further connections to each connection between the plurality of sources 12 and the plurality of consumers 14. The electrical energy distribution system 10 may further comprise a ground 16. Unipolar option and bipolar option are possible in a DC ring circuit.

The plurality of sources may also be one source 12. The source(s) 12 are electrical source(s), the consumer(s) 14 are electrical consumer(s). The number of consumers 14 is variable (shown by the dashed line). It can be 1 or more. The number of sources 12 is variable. It can be 1 or more. The sources 12 may provide DC or AC voltage. The sources 12 may (together) provide MV or a different voltage. The sources 12 may be identical sources or different sources. One or more of the sources 12 may be a battery, a power grid, a solar panel, wind or solar related collection grids, or something else which provides electrical energy.

The sources 12 may further comprise converters.

The consumers 14 may comprise converters and loads. Each consumer 14 may comprise one converter, and one or more loads. The converters may be identical or different. The loads may be identical or different. In the case of different converters, the loads are preferably different. How converters may be identical or different in aspects is described above. Identical loads may be the same electrical elements, or they may only require the same voltage and pose the same impedance.

Each of the converters may comprise one or more of a transformer, a DC-to-AC converter, an AC-to-DC converter, a DC-to-DC converter, and a medium frequency transformer. The DC-to-DC converter may be a dual active bridge or a different kind of a DC-to-DC converter (multiport active bridge, phase-shift full bridge, series resonant converters).

While this figure shows two phases, more than two phases are possible too (for example three phases). This applies to the entire disclosure. This holds especially for AC ring circuits. Fig. 3 shows an electrical energy distribution system 10 with a load distribution system. The electrical energy distribution system 10 comprises one source 12, a plurality (in this case five; alternatively, different number is possible) of consumers 14, and a plurality of bypass switches 26. Each consumer 14 comprises a converter 18, a battery 20, a load 22, and a part of interconnection 24. Each converter 18 is connected to loads 22 via the interconnection 24.

In this figure, each converter 18 comprises a transformer (three rings in middle of converter 18) with a first connection pair, a second connection pair, and a third connection pair. The converter 18 further comprises a DC-to-AC converter (on top of transformer in the figure) connected to the other converters of the plurality of converters 18 in the ring circuit and connected to the first connection pair of the transformer. The converter 18 further comprises a first AC-to-DC converter (to the right of the transformer) connected to the battery 20 and connected to the second connection pair of the transformer. The converter 18 further comprises a second AC-to-DC converter (below transformer) connected to the electrical load 22 and connected to the third connection pair of the transformer. In this figure, the converters 18 seem identical. They may have identical properties (impedance, winding number, etc.). The insulation of the converters is different to each other.

The electrical source 12 may apply an absolute voltage on the right arm and a ground absolute voltage on the left arm (unipolar DC), or in other alternatives bi-polar DC. In this case, the converter 18-5 on the very right has an insulation which satisfies an insulation required when the electrical source applies a maximum operating voltage to this converter 18-5 (the voltage potential at the right arm of the electrical source 12). For the case of equal voltage drop over each converter 18, the next converter 18-4 has an insulation which satisfies 80% (four divided by five) of an insulation required when the electrical source applies a maximum operating voltage to this converter 18-4. The converter 18-3 an insulation which satisfies 60%; converter 18-2 an insulation which satisfies 40%; and the last converter 18-1 an insulation which satisfies 20%. Higher insulation in each converter 18 is possible. This lower insulation (lower than 100%) may save costs.

Preferably, insulations of the different converters 18 as follows are implemented: converter 18-5 an insulation which satisfies 100%; converter 18-4 an insulation which satisfies 100%; converter 18-3 an insulation which satisfies 75%; converter 18-2 an insulation which satisfies 50%; converter 18-1 an insulation which satisfies 25%. Higher insulation in each converter 18 is possible. With these (minimum) insulations, the system still works when one converter 18 is not used (for example, when the corresponding bypass switch 26 is closed). This may be meant with the keyword "redundancy".

In an alternative, the electrical source 12 provides bi-polar DC, with a voltage potential on one arm and the inverted voltage potential on the other arm. In this alternative, the outer converters (18-1 and 18-5) may have an insulation which satisfies an insulation required for the voltage potential and the inner converters (18-2 to 18-4) may have lower insulation. Such an insulation distribution may also work for other applied voltages (like unipolar DC, or AC).

The interconnection 24 in this figure may represent the load distribution system. Each load 22 is connected to two converters 18, wherein no two loads 22 are connected to the same two converters 18. The connection letters "a" to "e" show which converters 18 are connected to which loads 22. The first converter 18-1 has the connection letter "a" and is therefore connected to loads 22-1, 22-3, 22-5, and 22-7. It works similarly for the other connection letters "b" to "e". In this manner, a load 22 is still supplied with electrical energy when one converter 18 does not supply energy (for example because of a short circuit of closing of the bypass switch or another fault). This increases reliability.

The bypass switches 26 are provided in parallel to the converters 18 as seen in the figure. Each bypass switch corresponds to one converter 18 (26-1 to 18-1, 26-2 to 18-2, and so on). The bypass switches 26 can be closed and opened separately from each other (also held in an open or closed state individually from each other). When all converters 18 shall supply energy, the bypass switches 26 should all be opened. When one converter 18 shall not be used (/not supply energy), the corresponding bypass switch 26 can be closed. As the impedance of the bypass switch goes towards 0 (is significantly smaller than the impedance of the corresponding converter 18 (with load 22); or is 0), (essentially) no electrical energy will go towards the converter 18. It is also possible to bypass more than one converter 18 by closing more than one bypass switch 26.

In cases where the voltage drop over different converters 18 is different, the insulation of an individual converter 18 may be big enough to withstand the applied voltage it receives on the line when at least one other converter 18 (possibly the one other converter with the highest voltage drop) is not in use (maybe by closing the bypass switch 26 of the one other converter or otherwise short-circuiting it).

The insulation of one (or several) converter 18 may be even higher than stated above. Different insulation in different converters 18 may provide higher flexibility. When several bypass switches 26 are closed, the closed bypass switches 26 may be chosen that only the converters 18 with higher insulation are still operating (have open bypass switches 26).

Different parts of a converter 18 may have different insulation (standards). The lowest insulation of all of the parts of such a converter 18 is preferably according to the N - 1 or N - x case, described above. The change of voltage due to converter parts set before (connected in the direction of the electrical source, upstream) shall be considered: for example, the second AC-to-DC converter (below transformer) only needs insulation of the voltage put out by the transformer (which might be lower than the voltage applied by the electrical source 12/ the voltage dropping over the input of the converter 18), and so on. Parts which are set behind (downstream) of a transformer may have lower (/different) insulation. Due to the galvanic isolation provided by the transformer, different absolute voltages may apply and thus different insulation can be implemented.

Fig. 4 shows a traction case with an electrical energy distribution system. Five cars (or carriages) of a train are shown (each car represented by a dashed box). More or less cars are possible. Additionally, cars without consumers 14 may be added (when they are inbetween cars with consumers 14, a cable connection may be present to connect two adjacent consumers 14). Each car comprises a converter 18 and a load 22. Car 5 is connected to an electrical source 12 (may be a power grid (preferably an AC power source, while DC is possible)). Car 1 is connected to ground 16. In the embodiment of this figure, the ground 16 may be used as a counter part to the electrical source 12 (AC power source). The ground 16 may hence have a different purpose as in figures 1 and 2. The converters 18 are connected in the ring circuit with the electrical source 12 on one end and the ground 16 on the other end. Thus, only one (single) power cable may be routed between the cars. This power cable may be a MV cable. Further, bypass switches 26 are comprised as shown.

Each converter 18 comprises (from top to bottom) a first AC-to-DC converter, a first DC-to-AC converter, a transformer, a second AC-to-DC converter, and a second DC-to-AC converter. The first AC-to-DC converter together with the first DC-to-AC converter and/or the second AC-to-DC converter together with the second DC-to-AC converter are optional. The load 22 may be a traction engine, which may drive train wheels. Each traction engine may be identical, additionally preferable each converter 18 may be identical. Insulation on converters 18 may be as disclosed for the other converters 18 described above. In the case of N - 1 or N - x redundancy, a standard length/ standard number of cars may be used for N - standard as in providing a standard train length.

This allows flexibility in scaling of a train length. Each car has its own drive train (traction engine 22). It is possible to reconfigure ring circuit connection to have multiple cells (consumers 14: this may be multiple converters 18 with multiple loads 22 or one converter 18 with multiple loads 22) per car.

The traction engines may work on LV.

Fig. 5 shows another traction case with an electrical energy distribution system. Many aspects are similar as in fig. 4. Therefore, differences shall be explicitly described. Not described aspects may be as in fig. 4.

A part of the converters 18 is accumulated in one car, while the loads 22 (traction engines) are spread one in each car (together with the other part of the converters 18 as seen in fig. 5).

The second DC-to-AC converter together with the second AC-to-DC converter (similarly as the first AC-to-DC converter together with the first DC-to-AC converter) is optional. Accordingly (or as an alternative), the entire converters 18 may be accumulated in one car, while no part of the converters 18 are spread over the cars.

As shown in fig. 5, two cables are used for the connection between (most parts of the) converter 18 and the loads 22 (together with the second DC-to-AC converter). In this case, the converters 18 are cumulated in one car and are connected in parallel on the load side to better share the loads 22.

Alternating to fig. 5, there may only be one cable between the converters 18 and the loads 22, and additional grounds 16 may be connected to each of the loads 22 (several grounds 16, each in a different car). In one embodiment, each traction engine may be connected to two converters 18 (which are all accumulated in one car), while no two traction engines are connected to the same two converters 18 (similarly as interconnection 24 in fig. 3).

Fig. 6 shows a method 60 of producing an Electrical energy distribution system. In step 62, providing an electrical source configured to provide a voltage. In step 64, providing a plurality of converters, connected in a ring circuit with each other and the electrical source (on a first side of each converter of the plurality of converters). In embodiments, each converter of the plurality of converters may have an insulation which is lower than an insulation requirement when the electrical source applies a maximum operating voltage to the first converter of the plurality of converters connected in the ring circuit.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Electrical energy distribution system comprising:
an electrical source (12); and
a plurality of converters (18), connected in a ring circuit with each other and the electrical source (12).

2. Electrical energy distribution system according to claim 1, wherein a first converter of the plurality of converters (18) has an insulation which is lower than an insulation required when the electrical source (12) applies a maximum operating voltage to the first converter of the plurality of converters (18) connected in the ring circuit

3. Electrical energy distribution system according to claim 2, wherein the insulation of the first converter of the plurality of converters (18) is configured to withstand a voltage at the first converter when the electrical source (12) applies the maximum operating voltage to the plurality of converters (18).

4. Electrical energy distribution system according to any one of claims 1 to 3, further comprising a plurality of bypass switches (26), wherein each converter (18) of the plurality of converters (18) is connected on the first side of the converter (18) in parallel with one bypass switch of the plurality of bypass switches (26).

5. Electrical energy distribution system according to any of claims 1 to 3, wherein each converter (18) of the plurality of converters (18) is configured for a voltage drop of the voltage of the electrical source (12) divided by N - 1, where N is a number of the plurality of converters (18) connected in the ring circuit.

6. Electrical energy distribution system according to any of claims 1 to 5, wherein an insulation of each converter (18) of the plurality of converters (18) is bigger than or equal to a requirement for insulation of an absolute voltage the corresponding converter is configured to receive on one side of the serial connection relative to an absolute voltage applied by the electrical source (12) at the other end of the serial connection.

7. Electrical energy distribution system according to any one of claims 1 to 6, wherein each but one converter (18) of the plurality of converters (18) has an insulation which is lower than an insulation required when the electrical source (12) applies a maximum operating voltage to the corresponding converter of the plurality of converters (18).

8. Electrical energy distribution system according to any one of claims 1 to 7, wherein at least one converter (18) of the plurality of converters (18) comprises at least one of: a transformer, a DC-to-AC converter, an AC-to-DC converter, a DC-to-DC converter, and a medium frequency transformer.

9. Electrical energy distribution system according to claim 8, further comprising:
a battery (20);
an electrical load (22);
wherein the converter (18) comprises:
the transformer with a first connection pair, a second connection pair, and a third connection pair;
the DC-to-AC converter connected to the other converters of the plurality of converters (18) in the ring circuit and connected to the first connection pair of the transformer;
a first AC-to-DC converter connected to the battery (20) and connected to the second connection pair of the transformer; and
a second AC-to-DC converter connected to the electrical load (22) and connected to the third connection pair of the transformer.

10. Electrical energy distribution system according to any one of claims 1 to 9, wherein the electrical source (12) comprises a plurality of electrical sub-sources connected in series.

11. Electrical energy distribution system according to any one of claims 1 to 10, wherein the electrical source (12) is configured to provide a medium voltage direct current, MVDC.

12. Electrical energy distribution system according to any one of claims 1 to 11, further comprising a plurality of electrical loads (22), each load (22) of the plurality of electrical loads (22) connected to at least one converter (18) of the plurality of converters (18).

13. Electrical energy distribution system according to claim 12, wherein each load (22) of the plurality of electrical loads (22) is connected to two converters (18) of the plurality of converters (18).

14. Electrical energy distribution system according to claim 12 or 13, wherein the plurality of electrical loads (22) is configured to function on a low voltage direct current, LVDC.

15. Train comprising the electrical energy distribution system (10) according to any one of claims 1 to 8.

16. Train according to claim 15, wherein the plurality of converters (18) is distributed over the at least two cars of the train.

17. Train according to claim 15, wherein at least a part of each converter (18) of the plurality of converters (18) is comprised by one car of the train.

18. Method of producing an Electrical energy distribution system comprising:
providing an electrical source (12) configured to provide a voltage;
providing a plurality of converters (18), connected in a ring circuit with each other and the electrical source (12).
